Europäisches Patentamt

European Patent Office

Office européen des brevets

(11) Publication number: **0 158 636**
**B1**

(12) **EUROPEAN PATENT SPECIFICATION**

(45) Date of publication of patent specification: **11.04.90**

(21) Application number: **84900130.0**

(22) Date of filing: **06.12.83**

(86) International application number:
PCT/SE83/00427

(87) International publication number:
**WO 84/02431 21.06.84 Gazette 84/15**

(51) Int. Cl.⁵: **H 02 J 7/16**

(54) **METHOD FOR RECHARGING A RECHARGEABLE BATTERY.**

(30) Priority: **06.12.82 SE 8206946**
**01.07.83 SE 8303775**

(43) Date of publication of application:
**23.10.85 Bulletin 85/43**

(45) Publication of the grant of the patent:
**11.04.90 Bulletin 90/15**

(84) Designated Contracting States:
**DE FR GB SE**

(56) References cited:
**EP-A-0 034 003**
**DE-A-2 557 010**
**DE-B-2 402 182**
**FR-A-2 183 257**
**FR-A-2 454 209**
**GB-A-1 246 993**
**US-A-3 617 851**
**US-A-3 890 556**
**US-A-3 936 718**
**US-A-3 938 019**
**US-A-4 237 411**

(73) Proprietor: **WAHLSTRÖM, Tommy**
**PL 4571**
**S-434 00 Kungsbacka (SE)**
(73) Proprietor: **HELIANTHUS A.S.**
**c/o Stüssi Burgstrase 30**
**CH-1223 COLOGNY (CH)**

(72) Inventor: **Wahlström, Tommy**
**PI 4571**
**S-434 00 KUNGSBACKA (SE)**

(74) Representative: **Willquist, Bo Lorentz**
**PATS Willquist Patents S:t Larsgatan 29**
**S-582 24 Linköping (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a method for recharging a rechargeable battery for a motor vehicle a working machine, a motor boat or the like wherein the output voltage from a battery charging generator connected to the battery is used as a charging voltage the size of which can be varied by means of controlling the field of a generator as well as to a charging regulator for carrying out this method.

A method for recharging a chargeable battery as stated above is known from GB-A-1246993 relating to a voltage relator circuit for voltage regulation of the output of a voltage generator including a field winding and being connected to charge a storage battery. The voltage regulator circuit comprises means to sense the temperature of the battery and further means responsive to the temperature sensing means to vary the charging voltage depending on the temperature of the battery. The regulator works with only one output voltage, the amplitude of which is varied depending on the temperature of the battery whereas the condition of the battery is not taken into account in anyway for determining the charging voltage necessary to effect a satisfactory charging of the battery.

US-A-4237411 discloses a method for maintaining the charge and for continuously charging of storage batteries and in particular of NiCd storage batteries. The charging is performed by supplying to the battery at predetermined, substantially uniform intervalls a current lasting for an also predetermined, substantially uniform after-charge period. The intensity of the charging current is determined by the prevailing storage battery temperature so as to increase with increasing temperature and decrease with decreasing temperature of the battery. Such a method has the deficiency that the charging voltage is allowed to raise to values that would lie far above the upper limit of the range of operating voltages of the electrical system of a vehicle. Such a condition is not acceptable with charging of vehicle batteries in situ, where the charging must be carried out such that the instrumentation of the vehicle is not damaged by raised voltages. The puls charging as disclosed in US-A-4237411 is also not adapted to recharge a chargeable battery to a satisfactory degree in the application for motor vehicles and the like.

Also EP-A-0034003 relates to a maintainenced charger for preferably and ICD batteries. The charging is carried out by means of pulses of charging current, whereby the current puls charging is terminated when a parameter of the method voltage change exhibits a predetermined characteristic. The method of this charger cannot be applied to tricle charging of vehicle batteries in situ and cannot give a satisfactory result in this respect.

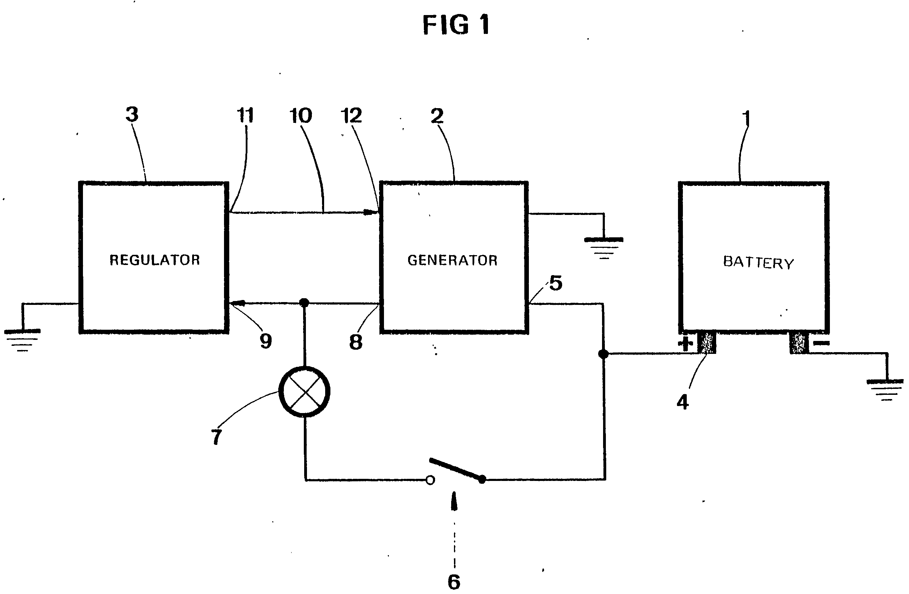

Finally, a block diagram of a conventional system for recharging chargeable batteries for motor vehicles and the like is shown in figure 1.

A generator 2 and a charging regulator 3 are internally electrically connected with a negative earth to be used for example in a motor vehicle. The plus pole 4 of the battery 1 is connected to the charging output 5 of the generator 2 and, via an ignition key switch 6, to one connection of a charging light 7, the other connection of which is connected to the regulator voltage output 8 of the generator 2. This is also connected to the supply- and measuring input 9 of the regulator 3. A line 10 connects the regulator output 11 of the regulator 3 with the field winding input 12 of the generator 2.

When the ignition key switch 6 is closed in connection with the engine being started, the regulator 3 is fed from the battery 1 and can in turn feed the field winding of the generator 2. Before the charging commences, current is taken from the battery 1 to the regulator 3. This current passes through the charging lamp 7, which then lights up. When the generator 2 is recharging the battery 1, the voltage of the output 8 is equal to the battery voltage. At this time there is no current going through the charging light 7, which consequently does not light up. The regulator 3 works in such a fashion that, by detecting the voltage on the output 8, it controls the generator field so that the output voltage of the generator 2, i.e. its charging voltage, has a preset value. When the input voltage of the regulator underpasses this voltage value, the battery is completely recharged. The charging ceases when the input voltage reaches said value.

The recharging of the battery 1 is not satisfactory if the generator runs at a low number of revolutions, if the connections between the generator 2 and the battery 1 are in bad condition or if the charging ability of the battery 1 is reduced. If conductors, connections between the conductors and the poles of the battery 1 and battery master switch are of bad condition a potential drop is caused on the way from the generator to the battery. As the regulator 3 detects the voltage at the generator 2, and not at the battery, this means that the charging voltage is in such cases much less than the charging voltage necessary for charging the battery 1. The conventional regulator 3 controls the output voltage of the generator 2 without considering the charging ability of the battery. This means that the effective charging is very bad also with an extremely discharged battery. The object of the present invention is to achieve a method and a charging regulator for recharging rechargeable batteries which method and regulator do not have the above disadvantages, in particular wherein the battery is recharged in a rapid and satisfactory way without damaging the electrical components connected to the battery.

This object is achieved by the method characterized in claim 1 and the charging regulator characterized in claim 8.

In the method and the charging regulator according to the invention the recharging is performed at two voltage levels by controlling the output voltage of the generator. The raised charging voltage, the so called rapid charging voltage, is said to be just below the upper limit of the range of operating voltages of the electrical system which is supplied from the battery. The second voltage level is the normal charging voltage, the so called compensation charging voltage which is comparable to the charging voltage as applied from the generator to the battery in conventional charging systems. With the method and the regulator of the invention, it is possible to recharge the battery more rapidly and to a higher degree as compared with conventional systems. Moreover, the electrical system connected to the battery and to the generator are not subjected to overvoltage.

Advantageous further embodiments of the invention are claimed in the subclaims.

Embodiments of the invention are now described with reference to the enclosed drawings, where

Figure 1 shows a conventional charging regulator system;

Figure 2 shows a charging regulator according to the invention;

Figure 3 is a flow chart which shows how a charging regulator according to the invention works;

Figures 4-6 are graphs showing indotted and continuous lines respectively how charging current, charging voltage and charging quantity varies with time when using a conventional charging voltage regulator and charging regulator according to the invention respectively; and

Figure 7 is a block diagram showing the principle desing of a charging regulator according to the invention.

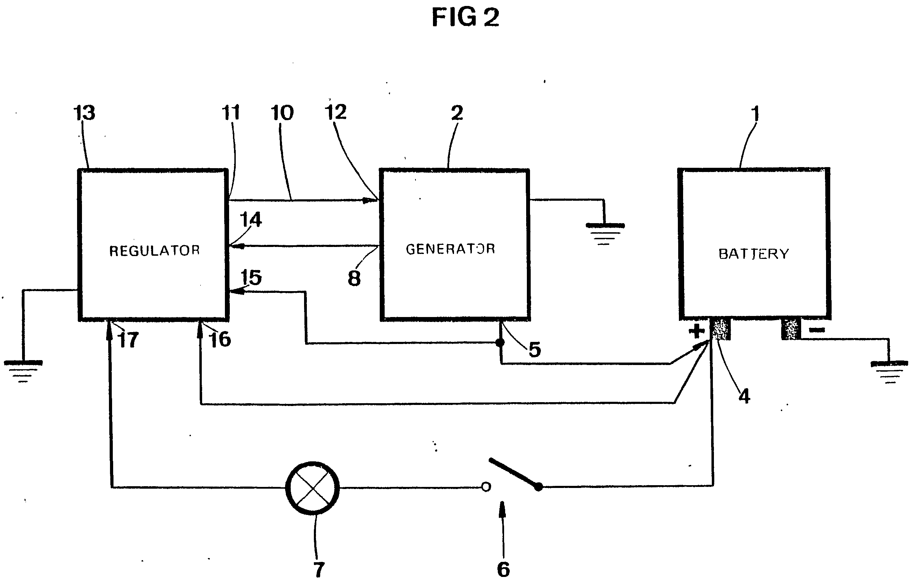

Figure 2 where the same reference numbers as in figure 1 are used when applicable, shows a charging regulator 13 according to an embodiment of invention. Apart from the output 11, which is identical with that of regulator 3, regulator 13 has four inputs 14, 15, 16 and 17. The input 14 is connected to the regulator voltage output 8 of the generator and arranged to receive a starting signal from the generator 2, showing that the generator is working and is generating a charging voltage. The input 15 connected to the charging output 5 of the generator and to the plus pole 4 of the battery 1 can be compared with the input 9 of the regulator 3 which is a feed- and test signal input. The input 16 is directly connected to the plus pole of the battery 1 and is therefore the test signal input for the battery voltage and the input 17 which is connected to the plus pole 4 of the battery 1 via the ignition key switch 6 and the charging light 7 is also to be considered as a starting signal input the function of which can also be compared with that of input 9 of regulator 3.

The regulator 13 differs from the conventional regulator 3 in the following aspects. By way of the charging light 7 or any other acoustic or optic alarm means, alarm is obtained when the generator 2 does not reach its working voltage due to too low number of revolutions. It also gives an alarm if the potential drop between the generator 2 and the battery 1 is unacceptably high. The charging voltage and therefore also the charging current to the battery 1 is regulated depending on the condition of the battery. Charging is carried out by means of repeated charging cycles each of which consist of a charging period and a test period with the battery loaded. The charging voltage is decided depending on the test result. An extremely discharged battery cannot assimilate maximum charging for an unlimited time. Therefore a time limit to protect the battery against this type of overcharging is set.

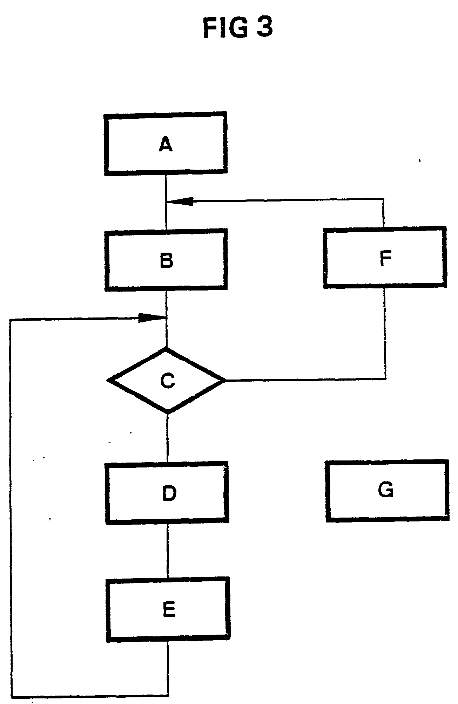

Charging according to the invention is explained with reference to the flow chart in figure 3. Step A refers to starting condition. Feeding of current to the regulator is started through the input 15, and the charging programme is set a zero. Step B is a charging period during which a charging voltage, giving a compensating charge of the battery, is applied to the battery for a certain period of time (5 minutes). If a 12V battery is used for which, as will be assumed in the following, a typical value of a compensating charge voltage is 14V, the mentioned period of time is 5 minutes. To achieve this, the battery voltage is compared to a reference voltage and the regulator controls the field current of the generator so that said voltages become equal.

To check the condition of the lead between the generator and the battery, the battery voltage is compared to another reference voltage (9V), which is considerably lower than the first said reference voltage. If the battery voltage happens to be lower than the second reference voltage the voltage detection of the regulator 13 is changed from the battery pole 4 to the charging output 5 of the generator 2. After the above mentioned period of time (5 minutes) has lapsed the regulator programme switches over to step C.

Step C is a measuring phase. The battery voltage is measured for a certain period of time (1 minute) but is cut off if the battery voltage drops below a certain voltage (13, 2V) before the said period of time has ended. While measuring, all alarms are blocked, the charging of the battery is cut off by cutting the field current of the generator 2. It is presumed that the battery is loaded while measuring. This is automatically the case with cars with the head lights or other equipment switched on. Measuring of the battery voltage takes place by comparing it to the said reference voltage. If the battery voltage is equal to or less than the reference voltage, the programme continues to step D. If the battery voltage is higher than the reference voltage the programme continues to step F.

In step D the battery is charged with a charging voltage (14, 6V) for a certain period of time (8 minutes) which means rapid charging of the battery. The said time, however, is counted from the moment in which the voltage exceeds a certain value (14, 4V), whereby a rapid charging time period which takes into account the capacity of the battery is achieved. In other words step D is a rapid charging phase.

During step E charging takes place with a compensation charging voltage (14V) for a period of time (2 minutes) which is shorter than the time period of step D. Thereafter the charging programme switches to step C.

If the battery voltage is higher than the first reference voltage the charging programme of the regulator switches to step F.

Step F is a compensating charging phase which takes place for a comparatively long time (1-3 hrs). After this the programme switches to step B.

It can be observed that the chain consisting of steps C, D and E means rapid charging of the battery, while the chain including steps C, F and B means compensating charging of the battery.

In step G the different test measurements or comparisons are carried out according to the invention. The battery voltage and the generator voltage are continuously compared to the reference voltages to state overvoltage, undervoltage or unacceptable potential drops in the lead between the generator and the battery.

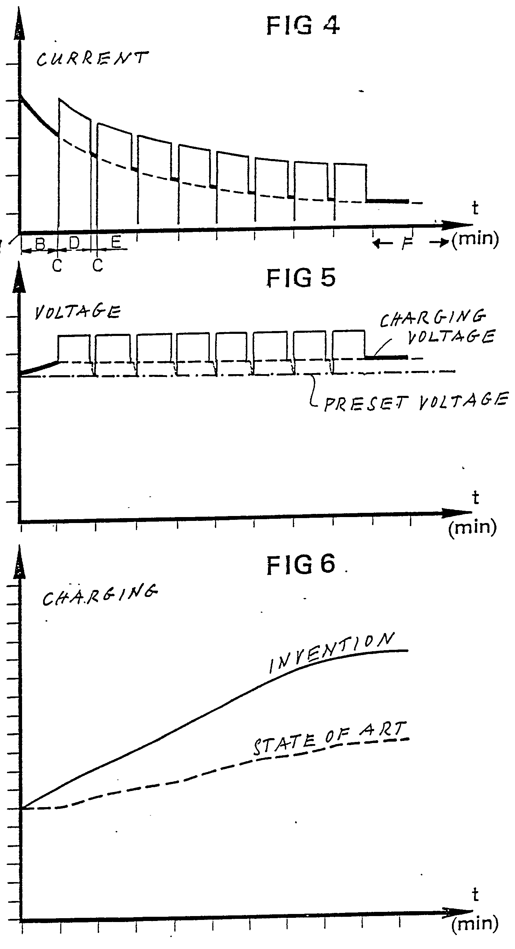

In figures 4 and 5 the programme steps A, B, C, D and E are shown again in graphs showing charging current and charging voltage respectively. The amount of charging is shown in the graphs of figure 6 where the continuous line shows charging according to the invention and the dotted line shows charging in a conventional way. It is apparent that the continuous line (invention) lays well above the dotted line (state of art).

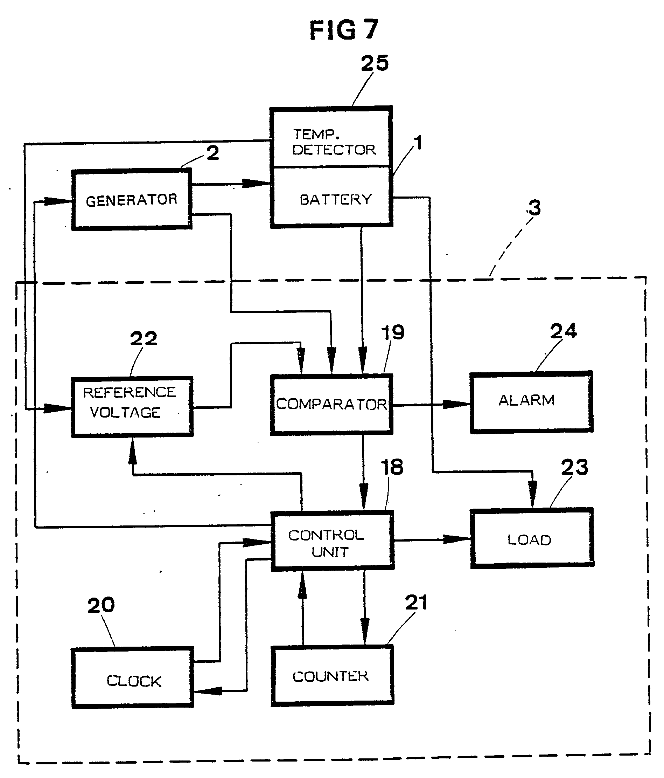

One example of the regulator will be explained in the following, referring to the block diagram in figure 7. For simplifying reasons the circuits explained in rather general terms. In reality the whole regulator is preferably built up on one integrated circuit.

In figure 7 the battery 1, the generator 2 and within a dotted frame the regulator 3 are shown again. The circuit includes a control unit 18 the inputs of which are connected to a comparator 19, a clock 20 consisting of an oscillator and a binary counter, arranged to generate control pulses to control all time periods in the control unit 18 and a counter 21. The outputsof the control unit 18 are connected to a reference voltage source 22 arranged to generate the reference voltages to the generator 2, to the clock 20, the counter 21 and to the load 23. The inputs of the comparator are connected to the reference voltage source 22, the generator 2 and the battery 1. The output of the comparator 19 is furthermore connected to an alarm device 2 arranged to give an optic and/or acoustic alarm.

A temperature detector 25 thermally connected to the battery 1, is arranged to generate a signal relating to the temperature of the battery and to control the reference voltage source 22 with this signal so that all reference voltages and thereby also the battery charging voltage are increased with a decreasing battery temperature. The opposite takes place with an increasing battery temperature.

The comparator 19 includes a number of comparator circuits to compare the reference voltages from the reference voltage source 22 with the generator and battery voltages. As a result of these comparisons control signals are supplied to the control unit 18 and alarm signals are supplied to the alarm device 24. This is to give alarms having different characteristics for different failure so that these can be easily identified.

The control unit 18 is arranged to control the generator voltage depending from the inputs from the comparator 19, the clock 20 and the counter 21. If the battery 1 is not loaded enough during measuring phase, which is often the case with diesel engine driven motor boats, the load 23 is automatically switched on. The numbers of charging cycles where a charging takes place at a rapid charging voltage is counted by the counter 21, which is arranged to give a switch-off signal to the control unit when a preset number of rapid charging cycles (e.g. 8) has been passed through.

**Claims**

1. Method for recharging a rechargeable battery (1) for a motor vehicle, a working machine, a motor boat or the like where the output voltage from a battery charging generator (2) connected to the battery (1) is used as a charging voltage the size of which can be varied by means of controlling the field of a generator (2) characterized in that, the recharging is performed by means of repeated charging cycles each of which consists of a charging period and a test period during which the battery is loaded and the charging current from the generator (2) to the battery is cut off by cutting the field current of the generator, but during the test period the value of the battery voltage at a battery pole thereof is compared to a preset voltage, that if the comparison shows that the battery voltage is lower than the preset voltage or drops below the preset voltage during the test period, the recharging takes place at a rapid charging voltage high enough for a rapid recharging of the battery during the first part of the following charging period, and if the comparison shows that the battery voltage is higher that the preset voltage, the recharging during the following charging period takes place at a compensation charging voltage which gives a compensating charge of the battery, and that during a second part of the charging period, immediately before the test period, the charging always takes place at a compensation charging voltage.

2. Method according to claim 1, characterized in that, the battery voltage is compared with a reference voltage which is considerably lower than normal battery voltage and that if the battery voltage is lower than the reference voltage an alarm signal is given and/or causes an automatic switch from comparing the voltage at the battery (1) to comparing the voltage at the generator (2).

3. Method according to claim 1, characterized in that, the voltage drop in the connection between the battery (1) and the generator (2) is measured and an alarm is given if the voltage drop exceeds a preset voltage relating to a maximum accepted voltage drop.

4. Method according to claim 1, characterized in that, the output voltage of the gett, the output voltage of the generator at the battery (1) is compared with the reference voltage and that an alarm is given when the generator voltage drops below said voltage.

5. Method according to claim 1, characterized in that, the temperature of the battery (1) is detected and that all reference voltages are increased in proportion to a decreasing battery temperature and are decreased in proportion to an increasing battery temperature.

6. Method according to claim 1, characterized in that, recharging with a rapid charging voltage is carried out in a preset number of charging cycles and that the recharging takes place thereafter at a compensating charge voltage for one or two hours.

7. Method according to claim 1, characterized in that, during the charging with the rapid charging voltage, the duration of the first portion of the charging period is counted in effective charging time, i.e. the period duration is counted from the moment, where the charging voltage exceeds a certain value.

8. Charging regulator for carrying out the method of claim 1, characterized in that the regulator (3) includes a control device (18) arranged to define charging cycles comprising charging periods and test periods and to cut off, during the test periods, the field current of the generator (2) to interrupt the charging of the battery (1), and that a reference voltage source (22) with a comparator (19) is arranged to compare the battery voltage with a preset voltage value, and that the control device (18), during the following charging period applies charging voltage to the battery (1), the charging voltage being so high that rapid recharging of the battery (1) is effected provided that the comparator (19), during the test period, has found that the battery voltage is lower than the preset voltage or has dropped below the preset voltage, and the charging voltage to the battery being big enough for a compensation charging of the battery if the battery voltage is higher than the preset voltage.

9. Charging regulator according to claim 8, characterized in that, the regulator (3) includes a temperature detector (25) arranged on the battery (1) and that the reference voltage source (22) is arranged to increase the value of the reference voltage in proportion to a decreasing battery temperature and to decrease its value in proportion to an increasing temperature depending on the output from the temperature detector (25).

10. Charging regulator according to claim 8, characterized in that, the charging regulator includes an optic and/or acoustic alarm device (24) and that a switch device is connected to the battery (1) and the generator (2) and that the comparator (19) is arranged to compare the battery voltage with a reference voltage and that if the voltage drop is bigger than the reference voltage the alarm device (24) is effected to alarm and/or automatically effect said switching device so that the test point of the regulator (3) is switched from the battery (1) to the generator (2).

11. Charging regulator according to any of claims 8-10, characterized in that, the comparator (19) is arranged to compare said voltage drop with a voltage relating to a maximum acceptable voltage drop and that the regulator (3) is arranged to alarm if the voltage drop is equal to or exceeds said voltage by means of the alarm device.

12. Charging regulator according to any of claims 8-11, characterized in that the regulator (3) includes a counting device (21) arranged to count the number of consecutive charging periods where charging takes place at a charging voltage relating to a rapid charging and to control the charging regulator (3) to add the compensating recharging voltage to the battery (1) for a comparatively long time when said number exceeds a preset number of charging periods.

**Patentansprüche**

1. Verfahren zum Nachladen einer Ladebatterie (1) für ein Kraftfahrzeug, eine Arbeitsmaschine, ein Motorboot oder dergleichen, wobei die Ausgangsspannung aus einem Batterieladegenerator, der mit der Batterie (1) zusammengeschaltet ist, als Ladespannung verwendet wird, deren Größe mittels Regelns des Feldes des Generators (2) verändert werden kann, dadurch gekennzeichnet, daß das Nachladen mittels wiederholter Ladezyklen durchgeführt wird, deren jeder aus einer Ladeperiode und einer Testperiode besteht, während welcher die Batterie geladen und der Ladestrom vom Generator (2) zur Batterie durch Unterbrechen des Feldstromes des Generators unterbrochen wird, daß jedoch während des Testperiode der Wert der Batteriespannung an einem Batteriepol mit einer vorgegebenen Spannung verglichen wird, daß dann, wenn der Vergleich ergibt, daß der Batteriestrom geringer als die vorgegebene Spannung ist, oder unter die vorgegebene Spannung während der Testperiode fällt, das Nachladen bei einer Schnelladespannung erfolgt, die groß genug für ein schnelles Nachladen der Batterie während des ersten Teiles der folgenden Ladeperiode ist, daß dann, wenn der Vergleich ergibt, daß die Batteriespannung oberhalb des vorgegebenen Spannungswertes liegt, das Nachladen während der folgenden Ladeperiode bei einer Kompensationsladespannung durchgeführt wird, die eine Kompensationsladung der Batterie erbringt, und daß während eines zweiten Teiles der Ladeperiode unmittelbar vor der Testperiode das Laden stets bei einer Kompensationsladespannung stattfindet.

2. Verfahren nach Anspruch 1, dadurch gekennzeichnet, daß die Batteriespannung mit einer Bezugsspannung verglichen wird, die wesentlich niedriger als die normale Batteriespannung ist, und daß dann, wenn die Batteriespannung unter der Bezugsspannung liegt, ein Alarmsignal abgegeben und/oder ein automatischer Schalter dahingehend betätigt wird, daß er die Spannung an der Batterie (1) mit der Spannung am Generator (2) vergleicht.

3. Verfahren nach Anspruch 1, dadurch gekennzeichnet, daß der Spannungsabfall in der Leitung zwischen Batterie (1) und Generator (2) gemessen und ein Alarmsignal dann abgegeben wird, wenn der Spannungsabfall eine vorgegebene Spannung übersteigt, und zwar in Bezug auf einen maximal zulässigen Spannungsabfall.

4. Verfahren nach Anspruch 1, dadurch gekennzeichnet, daß die Ausgangsspannung des Generators an der Batterie (1) mit der Bezugsspannung verglichen wird, und daß ein Alarmsignal dann abgegeben wird, wenn die Generatorspannung unter die genannte Spannung abfällt.

5. Verfahren nach Anspruch 1, dadurch gekennzeichnet, daß die Temperatur der Batterie (1) erfaßt wird, und daß alle Bezugsspannungen in Abhängigkeit von einer abnehmenden Batterie-Temperatur vergrößert, und in Abhängigkeit von einer zunehmenden Temperatur verkleinert werden.

6. Verfahren nach Anspruch 1, dadurch gekennzeichnet, daß das Nachladen bei Schnelladespannung ausgeführt wird in einer vorgegebenen Anzahl von Ladezyklen, und daß das Nachladen anschließend bei einer Kompensationsladespannung während einer oder zwei Stunden durchgeführt wird.

7. Verfahren nach Anspruch 1, dadurch gekennzeichnet, daß während des Ladens bei Schnelladespannung die Dauer des ersten Teiles der Ladeperiode als effektive Ladezeitdauer gemessen wird, d.h., daß die Periodendauer von dem Augenblick an gemessen wird, zu welchem die Ladespannung einen bestimmten Wert überschreitet.

8. Laderegler zum Durchführen des Verfahrens nach Anspruch 1, dadurch gekennzeichnet, daß der Regler (3) eine Regeleinrichtung (18) aufweist, die derart angeordnet ist, daß sie Ladezyklen definiert, umfassend Ladeperioden und Testperioden, und daß sie während der Testperioden den Feldstrom des Generators (2) abschaltet, um das Laden der Baterie (1) zu unterbrechen, daß eine Bezugsspannungsquelle (22) mit einem Komparator (19) derart angeordnet ist, daß er die Batteriespannung mit einem vorgegebenen Spannungswert vergleicht, daß die Regeleinrichtung (18) während der folgenden Ladeperiode Ladespannung der Batterie (1) einspeist, daß die Ladespannung so hoch ist, daß ein Schnelladen der Batterie (1) durchgeführt wird, vorausgesetzt, daß der Komparator (19) während der Testperiode ermittelt hat, daß die Batteriespannung unter der vorgegebenen Spannung liegt oder unter die vorgegebene Spannung abgefallen ist, und daß die Ladespannung zur Batterie groß genug ist als Kompensationsladung der Batterie, falls die Batteriespannung über dem vorgegebenen Spannungswert liegt.

9. Laderegler nach Anspruch 8, dadurch gekennzeichnet, daß der Regler (33) einen Temperaturdetektor (25) aufweist, der in der Batterie (1) angeordnet ist, und daß die Bezugsspannungsquelle (22) derart angeordnet ist, daß sie den Wert der Bezugsspannung in Abhängigkeit von einer abnehmenden Batterietemperatur anhebt, und ihren Wert in Abhängigkeit von einem zunehmenden Temperaturwert verringert, abhängig vom Ausgang des Temperaturdetektors (25).

10. Laderegler nach Anspruch 8, dadurch gekennzeichnet, daß der Laderegler eine optische und/oder akustische Alarmvorrichtung (24) umfaßt, daß ein Schalter an die Batterie (1) und den Generator (2) angeschlossen ist, daß der Komparator (19) derart angeordnet ist, daß er die Batteriespannung mit einer vergleicht, und daß dann, wenn der Spannungsabfall größer als die Bezugsspannung ist, die Alarmvorrichtung (24) ein Alarmsignal erzeugt und/oder automatisch den Schalter betätigt, so daß der Testpunkt des Reglers (3) von der Batterie (1) zum Generator (2) umgeschaltet wird.

11. Laderegler nach einem der Ansprüche 8 bis 10 dadurch gekennzeichnet, daß der Komparator derart angeordnet ist, daß er den genannten Spannungsabfall mit einer Spannung vergleicht, die sich auf einen maximal zulässigen Spannungsabfall bezieht, und daß der Regler (3) derart angeordnet ist, daß er dann ein Alarmsignal abgibt, wenn der Spannungsabfall gleich der genannten Spannung ist oder diese überschreitet.

12. Laderegler nach einem der Ansprüche 8 bis 11, dadurch gekennzeichnet, daß der Regeler (3) eine Zähleinrichtung (21) umfaßt, die derart angeordnet ist, daß sie die Anzahl der aufeinanderfolgenden Ladeperioden zählt, wobei das Laden bei einer Ladespannung stattfindet, die sich auf ein Schnelladen bezieht, und den Laderegler (3) dahingehend regelt, daß er Kompensations-ladespannung der Batterie (1) während einer vergleichsweise langen Zeitspanne dann einspeist, wenn die genannte Anzahl eine vorgegebene Anzahl von Ladeperioden übersteigt.

**Revendications**

1. Procédé pour la recharge d'une batterie rechargeable (1) destinée à un véhicule à moteur, une machine de travail, un bateau à moteur ou analogue dans lequel la tension de sortie d'un alternateur de charge de batterie (2) connecté à la batterie (1) est utilisée comme tension de charge dont la grandeur peut être variée au moyen de la commande du champ de l'alternateur (2), caractérisé en ce que la recharge est effectuée au moyen de cycles de charge répétés dont chacun consiste en une période de charge et une période de test durant lesquelles la batterie est chargée et le courant de charge provenant de l'alternateur (2) vers la batterie est coupé par une coupure du courant inducteur de l'alternateur, mais durant la période de test la valeur de la tension de batterie au niveau d'un pôle de batterie de celle-ci est comparée à une tension préfixée, en ce que si la comparaison montre que la tension de batterie est inférieure à la tension préfixée ou qu'elle chute en dessous de la tension préfixée durant la période de test, la recharge a lieu à une tension de charge rapide suffisamment élevée pour une recharge rapide de la batterie durant la première partie de la période de charge suivante, et si la comparaison montre que la tension de batterie est plus élevée que la tension préfixée, la recharge durant la période de charge suivante a lieu à une tension de charge de compensation qui donne une charge de compensation de la batterie, et en ce que durant une deuxième partie de la période de charge, immédiatement avant la période de test, la charge a toujours lieu à une tension de charge de correction.

2. Procédé selon la revendication 1, caractérisé en ce que la tension de batterie est comparée à une tension de référence qui est considérablement plus faible que la tension de batterie normale et en ce que si la tension de batterie est plus faible que la tension de référence un signal d'alarme est fourni et/ou provoque une commutation automatique d'une comparaison de la tension au niveau de la batterie (1) à une comparaison de la tension au niveau de l'alternateur (2).

3. Procédé selon la revendication 1, caractérisé en ce que la chute de tension dans la connexion entre la batterie (1) et l'alternateur (2) est mesurée et en ce qu'une alarme est donnée si la chute de tension excède une tension préfixée se rapportant à une chute de tension maximale acceptée.

4. Procédé selon la revendication 1, caractérisé en ce que la tension de sortie de l'alternateur au niveau de la batterie (1) est comparée à la tension de référence et en ce qu'une alarme est donnée lorsque la tension d'alternateur chute en-dessous de ladite tension.

5. Procédé selon la revendication 1, caractérisé en ce que la température de la batterie (1) est détectée et en ce que toutes les tensions de référence sont augmentées en proportion d'une température de batterie décroissante et sont diminuées en proportion d'une température de batterie croissante.

6. Procédé selon la revendication 1, caractérisé en ce qu'une recharge avec une tension de charge rapide est effectuée en un nombre préfixé de cycles de charge et en ce que la recharge a lieu ensuite à une tension de charge de compensation pendant une ou deux heures.

7. Procédé selon la revendication 1, caractérisé en ce que durant la charge avec la tension de charge rapide, la durée de la première partie de la période de charge est comptée en temps de charge effectif, c'est-à-dire la durée de la période est comptée à partir du moment où la tension de charge dépasse une certaine valeur.

8. Régulateur de charge pour mettre en oeuvre le procédé de la revendication 1, caractérisé en ce que le régulateur (3) comprend un dispositif de commande (18) disposé pour définir les cycles de charge comprenant des périodes de charge et des périodes de test et pour couper pendant les périodes de test le courant inducteur d'alternateur (2) afin d'interrompre la charge de la batterie (1), et en ce qu'une source de tension de référence (22) est associée à un comparateur (19) disposé pour comparer la tension de batterie avec une valeur de tension préfixée, et en ce que le dispositif de commande (18), durant la période de charge suivante, applique une tension de charge à la batterie (1), la tension de charge étant élevée de telle façon qu'une recharge rapide de la batterie (1) est effectuée à condition que le comparateur (19), pendant la période de test, ait trouvé que la tension de batterie est inférieure à la tension préfixée ou a chuté en-dessous de la tension préfixée, et la tension de charge de la batterie étant suffisamment grande pour une charge de compensation de la batterie si la tension de batterie est plus élevée que la tension préfixée.

9. Régulateur de charge selon la revendication 8, caractérisé en ce que le régulateur (3) comprend un détecteur de température (25) disposé sur la batterie (1) et en ce que la source de tension de référence (22) est disposée pour augmenter la valeur de la tension de référence en proportion d'une température de batterie décroissante et pour diminuer sa valeur en proportion d'une température croissante en fonction de la sortie provenant du détecteur de température (25).

10. Régulateur de charge selon la revendication 8, caractérisé en ce que le régulateur de charge comprend un dispositif d'alarme optique et/ou acoustique (24), en ce qu'un dispositif de commutation est connecté à la batterie (1) et à l'alternateur (2), en ce que le comparateur (19) est disposé pour comparer la tension de batterie à une tension de référence, et en ce que si la chute de tension est plus élevée que la tension de référence, le dispositif d'alarme (24) agit pour provoquer une alarme et/ou automatiquement affecter ledit dispositif de commutation de telle sorte que le point de test du régulateur (3) soit commuté de la batterie (1) vers l'alternateur (2).

11. Régulateur de charge selon l'une quelconque des revendications 8 à 10, caractérisé en ce que le comparateur (19) est disposé pour comparer ladite chute de tension avec une tension se rapportant à une chute de tension maximale acceptable, et en ce que le régulateur (3) est disposé pour provoquer une alarme si la chute de tension est égale ou supérieure à ladite tension au moyen du dispositif d'alarme.

12. Régulateur de charge selon l'une quelconque des revendications 8 à 11, caractérisé en ce que le régulateur (3) comprend un dispositif de comptage (21) disposé pour compter le nombre de périodes de charge consécutives où la charge a lieu à une tension de charge se rapportant à une charge rapide et pour commander le régulateur de charge (3) afin d'ajouter la tension de recharge de compensation à la batterie (1) pendant une durée relativement longue lorsque ledit nombre excède un nombre préfixé de périodes de charge.

FIG 1

EP 0 158 636 B1

# FIG 2

# FIG 3

## FIG 4

CURRENT

A ← B → ← D → ← E →                    ← F →  (min)
         C    C

t

## FIG 5

VOLTAGE

CHARGING
VOLTAGE

PRESET VOLTAGE

t
(min)

## FIG 6 .

CHARGING

INVENTION

STATE OF ART

t
(min)

# FIG 7